# EUROPÄISCHE PATENTSCHRIFT

(11) **EP 1 197 136 B1**
(45) Veröffentlichungstag und Bekanntmachung des Hinweises auf die Patenterteilung: **28.07.2004**
(21) Anmeldenummer: 01121979.7
(22) Anmeldetag: 13.09.2001
(51) Int. Cl.: A01F 12/24

(54) **Dreschkorb für Mähdrescher**
Concave for combine
Contrebatteur pour moissonneuse-batteuse

(30) Priorität: 15.09.2000 DE 10045795
(43) Veröffentlichungstag der Anmeldung: 17.04.2002
(73) Patentinhaber: Case Harvesting Systems GmbH, 01844 Neustadt (DE)
(72) Erfinder: Bauch, Heiko, Dipl.-Ing., 02625 Bautzen (DE); Rahn, Fred, 02692 Kleindöbschütz (DE)
(74) Vertreter: Müller, Lutz

(56) Entgegenhaltungen:
- DE-A- 2 817 279
- DE-C- 550 203
- DE-U- 6 916 279
- FR-A- 1 270 912
- DATABASE WPI Section PQ, Week 199440 Derwent Publications Ltd., London, GB; Class P12, AN 1994-323617 XP002181089 & SU 1 819 128 A (ROST AGRIC ENG INST), 30. Mai 1993 (1993-05-30)

## Beschreibung

Die Erfindung betrifft einen Dreschkorb für Mähdrescher mit einem Tangential-Dreschwerk zum Ausdrusch von Getreide und Sonderkulturen, insbesondere mit den Merkmalen nach dem Oberbegriff des Patentanspruchs 1.

Solche Dreschvorrichtungen sind in bekannter Weise mit einem Dreschkorb ausgestattet, der mit der Dreschtrommel so zusammen wirkt, daß dabei zum Beispiel im Falle von Getreide das Korn vom Stroh getrennt wird. In Anbetracht der vielfältigen unter die Begriffe Getreide und Sonderkulturen fallenden Arten der Dreschgüter, ihres Feuchtigkeitsgehaltes und der zu dreschenden Ertragsmasse müssen die Dreschkörbe bezüglich der Größe ihrer freien Durchlaßfläche an die jeweiligen Bedingungen angepaßt werden. Darüber hinaus sind deren Abstand zur Dreschtrommel und die Drehzahl der Dreschtrommel so zu verändern, daß sich der Dreschvorgang stets optimal gestaltet.

Zur schnellen Veränderung der freien Durchlaßfläche der Dreschkörbe sind bereits eine ganze Reihe von Ausführungsvarianten bekannt geworden. So ist beispielsweise in der DE 37 23 636 A1 ein Dreschkorb beschrieben, der aus einem Korbrahmen und einem auswechselbar in den Korbrahmen eingesetzten Korbeinsatz besteht. Dabei ist der Korbeinsatz durch eine seitliche Öffnung im Gehäuse der Dreschvorrichtung in einer parallelen Richtung zur Achse der Dreschtrommel in den Korbrahmen einschiebbar und daraus auch wieder entnehmbar. Auf diese Art und Weise werden Korbeinsätze mit unterschiedlich großen Durchlaßflächen gegeneinander ausgetauscht. Nachteilig an dieser Lösung ist, daß zum Aus- und Einbau der Korbeinsätze Freiräume vorhanden sein müssen, die zumindest bei selbstfahrenden Mähdreschern durch das Vorderrad und die Antriebe für die Dreschvorrichtung verbaut sind, wodurch sich das Anwendungsgebiet für diese Lösung auf ein unbedeutendes Minimum einschränkt. Außerdem ist der Aus- und Einbau der Korbeinsätze aufgrund deren hohen Gewichts und deren Sperrigkeit für einen Mann allein unmöglich, so daß eine weitere Person hinzugezogen werden muß. Auch die Herstellungskosten sind zu bemängeln, da der Korbrahmen sehr stabil ausgebildet sein muß, weil die Korbeinsätze zur Stabilität bei diesem Aufbau keinen Beitrag leisten können.

Eine weitere Ausführungsvariante zur Veränderung der freien Durchlaßfläche der Dreschkörbe ist mit der DE 38 32 996 A1 bekannt geworden, bei der der Dreschkorb drei modulare Dreschkorbelemente enthält, von denen jedes aus einem Rahmen mit zwei Seitenholmen besteht, zwischen denen abwechselnd feststehende und verdrehbare Korbleisten angeordnet sind. Die feststehenden Korbleisten sind aus Stabilitätsgründen mit den Seitenholmen verschweißt. An den verdrehbaren Korbleisten sind Klappenelemente befestigt, die aus einer langgestreckten rechteckigen Platte bestehen. Deren Länge ist im wesentlichen gleich der Länge der Korbleisten. Die verdrehbaren Korbleisten stehen alle mit einem Schwenkmechanismus in Verbindung, so daß durch deren Verschwenken die Klappenelemente den Abstand zwischen den Korbleisten entweder weitestgehend abdecken bzw. freigeben und damit die freie Durchlaßfläche des Dreschkorbes verändern. An diesem Dreschkorb ist zu bemängeln, daß Funktionsstörungen durch Verstopfungen zu erwarten sind, da der Schwenkmechanismus den freien Durchtritt des Dreschgutes durch den Dreschkorb nach unten einschränkt. Das dürfte sich insbesondere bei feuchtem Dreschgut sehr negativ auswirken. Ein weiterer Mangel dieses Dreschkorbes liegt in dessen erheblichen Herstellungskosten, weil einerseits die Fertigung des Schwenkmechanismus einschließlich der genannten verschwenkbaren Teile eine hohe Genauigkeit verlangt. Zum anderen muß zur Herstellung dieser Teile hochwertiges Material eingesetzt werden, damit es den von der Dreschtrommel auf den Dreschkorb ausgeübten hohen Kräften auch schadlos standhalten kann. Schließlich ist noch darauf hinzuweisen, daß ein derart aufwendig ausgebildeter Dreschkorb in den beiden hinteren Dritteln seiner Gesamtlänge diesen Aufwand gar nicht rechtfertigt, da der Dreschvorgang schwerpunktmäßig nur im ersten Drittel stattfindet. Diese Mängel dürften ganz sicher auch der Grund dafür sein, daß sich ein so aufgebauter Dreschkorb bis heute in der Praxis nicht durchsetzen konnte.

Eine dritte Möglichkeit zur Veränderung der freien Durchlaßfläche an einem Dreschkorb ist in der DE 39 14 962 A1 enthalten, wobei der Dreschkorb mit seinem Korbauslauf an zur Achse der Dreschtrommel parallel ausgerichteten und im Gehäuse der Dreschvorrichtung gelagerten Zapfen schwenkbar aufgehängt ist. Mittels zweier an seinem Korbeinlauf angreifender Lenkerstäbe kann er dort aufund abgeschwenkt werden. Sein Rahmen besteht aus einer vorderen und einer hinteren Längsleiste, zwei die Längsleisten verbindenden Stirnleisten und zwei zwischen diesen angeordneten und ebenfalls die Längsleisten miteinander verbindenden Stegen. Im Rahmen sind geeignete Auflageflächen angebracht, auf denen drei gleich breite Siebbelagteile nebeneinander aufliegen. Diese Siebbelagteile weisen in ihren Mantelblechen freie Durchlaßflächen in Form von Langlöchem auf und ihre zur Dreschtrommel zeigenden Flächen sind mit Korbleisten besetzt. Für Wartungszwecke bzw. zur Veränderung der freien Durchlaßflächen können sie aus dem Rahmen entnommen und durch geeignetere ersetzt werden. Dabei wird das Vorderteil des Dreschkorbes abgesenkt und die Siebbelagteile werden nach dem Lösen ihrer Befestigungselemente der Umfangsrichtung der Dreschtrommel folgend nach vorn und oben aus dem Rahmen entnommen. Die Nachteile dieses Dreschkorbes sind, daß der Ausbau der Siebbelagteile zeitlich aufwendig ist, da nach dem Lösen der vielen Befestigungselemente jedes Siebbelagteil einzeln entfernt werden muß, nachdem es in die mittlere Entnahmeposition gebracht wurde. Demzufolge ist auch der zeitliche Aufwand zum Einbau anderer Siebbelagteile beträchtlich. Ebenso sind seine Herstellungskosten zu bemängeln, da der Rahmen allein die Stabilität des gesamten Dreschkorbes aufbringen muß und deshalb ein relativ hoher Materialeinsatz notwendig ist.

Der Vollständigkeit halber wäre noch der Dreschkorb nach dem DE- GM 69 16 279 zu erwähnen, der aus einem Korbrahmen besteht, der aus zwei außen liegenden Korbwangen und mehreren die Korbwangen verbindenden Querversteifungen zusammengesetzt ist. Zwischen benachbarten Querversteifungen ist jeweils ein auswechselbarer Korbeinsatz mit seinen Korbwangen an denen des Korbrahmens angeschraubt. Die auswechselbaren Korbeinsätze wiederum bestehen aus je zwei Korbwangen, mit denen vier Korbleisten verschweißt sind, die zwecks Aufnahme von Korbdrähten Durchgangsbohrungen aufweisen. Zur Veränderung der freien Durchlaßfläche des Dreschkorbes wird vorgeschlagen, alle auswechselbaren Korbeinsätze nacheinander gegen andere auszutauschen, wobei diese durch seitliche Öffnungen im Gehäuse der Dreschvorrichtung in einer parallelen Richtung zur Achse der Dreschtrommel aus dem Korbrahmen entnehmbar und in diesen auch wieder einschiebbar sind. Auch an dieser Lösung ist zu bemängeln, daß zum Ausund Einbau der Korbeinsätze die Öffnung im Gehäuse trotzdem nahezu über die gesamte Länge des Dreschkorbes reichen muß, obwohl die auswechselbaren Korbeinsätze wesentlich schmaler sind. Das ist einmal wegen der Zugängigkeit zur Verschraubung notwendig und zum anderen wegen des Aus- und Einbaues von einer Seite, wo das zu entnehmende Korbsegment auf das nachfolgende aufgesetzt und auf diesem gleitend herausgezogen werden muß. Bezüglich des dafür nicht vorhanden Freiraumes wird auf die Ausführungen zur DE 37 23 636 A1 verwiesen. Auch die Herstellungskosten dieses Dreschkorbes sind zu bemängeln, da der allein die Stabilität des Dreschkorbes insgesamt aufbringen muß. Schließlich ist der Aus- und Einbau der auswechselbaren Korbeinsätze mit einem hohen Zeitaufwand verbunden, da auch bei dieser Lösung eine ganze Menge Schrauben zu lösen und wieder zu befestigen sind und vor allem alle Korbsegmente nacheinander einzeln aus- bzw. eingebaut werden müssen.

Der Erfindung liegt somit die Aufgabe zugrunde, einen Dreschkorb für Mähdrescher mit einem Tangential- Dreschwerk zum Ausdrusch von Getreide und Sonderkulturen zu schaffen, dessen Veränderung der freien Durchlaßflächen zur optimalen Anpassung an die unterschiedlichen Erntebedingungen durch nur eine Person unkompliziert und in kurzer Zeit möglich ist und dessen Herstellungskosten gering sind.

Diese Aufgabe wird gemäß der Erfindung mit den Merkmalen nach dem 1. Patentanspruch gelöst, wobei in den Unteransprüchen Merkmale aufgeführt sind, die diese Lösung in vorteilhafter Weise weiterentwickeln.

Durch den Einsatz von auswechselbaren Korbeinsätzen mit verschieden großen freien Durchlaßflächen nur im vorderen Teil des Dreschkorbes wird erfindungsgemäß die Tatsache in vorteilhafter Weise ausgenutzt, daß wenigstens achtzig Prozent der Körner aus dem Dreschgut in diesem Teil des Dreschkorbes im Zusammenwirken mit der Dreschtrommel abgeschieden werden. Da der sich in Durchflußrichtung des Dreschgutes gesehene und sich an die auswechselbaren Korbeinsätze anschließende Teil des Dreschkorbes mit Korbdrähten bestückt ist, zwischen denen sich unveränderbare freie Durchlaßflächen mittlerer Größe befinden, verschlechtert sich das Dreschergebnis im Vergleich zu einem komplett austauschbaren Dreschkorb mit durchgehend gleich großen freien Durchlaßflächen aus einem Stück bzw. einem Dreschkorb mit sich über seine gesamte Länge und Breite erstreckenden auswechselbaren Korbeinsätzen mit gleich großen freien Durchlaßflächen praktisch nicht.

Darüber hinaus ist der erfindungsgemäß gestaltete Dreschkorb genauso stabil wie diese, da er in seinem Grundaufbau als gitterartiges räumliches Gebilde im sich an die auswechselbaren Korbeinsätze anschließenden Teil weitestgehend mit einem Dreschkorb aus einem Stück übereinstimmt. Zur Veränderung der freien Durchlaßflächen zum Zwecke der Anpassung an die unterschiedlichen Erntebedingungen sind jetzt nur noch die sehr wenig Bauraum beanspruchenden und relativ leichten Korbeinsätze zu bewegen, wodurch beispielsweise eine einfache Möglichkeit zum seitlichen Aus- und Einbau aus dem Tangential- Dreschwerk entstanden ist. Darüber hinaus gestaltet sich auch der Ausbau der Korbeinsätze nach vom aus den gleichen Gründen sehr einfach, weil diese ungehindert über die Steinfangmulde herausgezogen werden können. Die so ausgebildeten auswechselbaren Korbeinsätze sind natürlich auch aufgrund ihrer geringen Abmessungen und ihrer unkomplizierten Befestigung am Dreschkorb in der Herstellung mit wenig Aufwand verbunden.

Obwohl in den Patentansprüchen und in der Beschreibung der Erfindung stets auf einen aus Korbwangen, Korbleisten und Korbdrähten bestehenden Dreschkorb Bezug genommen wurde, soll an dieser Stelle ausdrücklich darauf hingewiesen werden, daß andere Bauarten von Dreschkörben ebenfalls unter den Schutzbereich der Erfindung fallen, wenn sie einen erfindungsgemäßen Aufbau erkennen lassen. Das sind beispielsweise Dreschkörbe, deren freie Durchlaßflächen durch Öffnungen in Blechen in Form von Rund-, Lang- oder Rechtecklöchern gebildet werden.

Bezüglich der baulichen Abmessungen für die auswechselbaren Korbeinsätze hat es sich als zweckmäßig erwiesen, daß deren Länge etwa ein Drittel von der Gesamtlänge eines Dreschkorbes beträgt.

Aus der Sicht der Stabilität der auswechselbaren Korbeinsätze hat es sich bewährt, daß deren Korbwangen, Korbleisten und Korbdrähte unlösbar miteinander verbunden sind, wofür sich in erster Linie das Schweißen anbietet.

In einer bevorzugten Ausführungsvariante der Erfindung kommen drei auswechselbare Korbeinsätze zum Einsatz, deren Korbdrähte in einem seitlichen Abstand von 7,5 Millimetern, 9,5 Millimetern und 12,5 Millimetern an den Korbleisten befestigt sind. Mit diesem Satz ist es möglich, die Körner von Getreide und Sonderkulturen optimal abzuscheiden, ganz gleich ob sie trocken oder feucht sind oder ob ein hoher oder geringer Strohanteil bei unterschiedlichen Erträgen zu bearbeiten ist.

Für die formschlüssige und lösbare Befestigung der auswechselbaren Korbeinsätze am Dreschkorb bietet es sich an, die nach unten zeigenden Außenkonturen der äußersten Korbwangen der auswechselbaren Korbeinsätze trapezförmig auszubilden, die in formgleichen Ausnehmungen der äußersten Korbwangen des Dreschkorbes aufgenommen sind. Eine beide Korbwangen miteinander verbindende Haltelasche sorgt für einen sicheren Sitz des auswechselbaren Korbeinsatzes in den Korbwangen des Dreschkorbes.

Auch für den sich an die auswechselbaren Korbeinsätze anschließenden Teil des Dreschkorbes hat es sich aus Stabilitätsgründen als zweckmäßig erwiesen, die Korbwangen, die Korbleisten und die Korbdrähte durch Schweißen unlösbar miteinander zu verbinden. Der seitliche Abstand der Korbdrähte sollte in einer Größenordnung von ungefähr 9,7 Millimetern liegen, weil mit diesem Durchnittswert die Restabscheidung der Körner von Getreide und Sonderkulturen unter allen Einsatzbedingungen, für hohe und auch niedrige Strohanteile und sehr unterschiedliche Erträge problemlos möglich ist.

Eine bevorzugte Ausgestaltung der Erfindung wird darin gesehen, die auswechselbaren Korbeinsätze derart symmetrisch auszubilden, daß sie nach einer Drehung um 180 Grad um ihre Hochachse ebenfalls in die Aufnahmemöglichkeit im vorderen Teil des Dreschkorbes passen und in dieser Position befestigt werden können. Durch eine derartige Drehung, wodurch die ursprünglich linke Korbwange des betreffenden Korbeinsatzes zur rechten wird und umgekehrt, werden auch die Korbleisten mit gedreht, wodurch die bisher nicht benutzten scharfen Kanten der Korbleisten nach vorn kommen und dort wieder wie neue arbeiten. Da oft auch die vorderste Korbleiste infolge der auf sie einwirkenden höchsten Belastung verbogen ist, wird auch dieser Mangel durch besagtes Drehen ganz einfach behoben.

Damit ergeben sich zusammengefaßt als Vorteile für den Dreschkorb für Getreide und Sonderkulturen nach der Erfindung, daß dessen Veränderung der freien Durchlaßflächen zur optimalen Anpassung an die unterschiedlichen Erntebedingungen durch nur eine Person und in kurzer Zeit möglich ist, daß dessen Herstellungskosten gering sind und daß darüber hinaus noch die Lebensdauer des Dreschkorbes gestiegen ist.

Die Erfindung soll nun anhand eines Ausführungsbeispiels näher erläutert werden, wobei die einzelnen Figuren zeigen:
- Fig. 1:: eine Seitenansicht auf die linke Seite eines Mähdreschers im Bereich der Dreschtrommel eines Tangential- Dreschwerkes mit leicht abgesenktem Dreschkorb
- Fig. 2:: eine Seitenansicht auf die linke Seite eines kompletten Dreschkorbes mit einem auswechselbaren Korbeinsatz in dessen in Durchflußrichtung des Dreschgutes gesehenen vorderen Teil
- Fig. 3:: eine Draufsicht nach Figur 2
- Fig. 4: eine vergrößerte Einzelheit "A" nach Figur 3
- Fig. 5:: eine Seitenansicht auf die linke Seite eines Dreschkorbes mit nach oben entnommenem auswechselbarem Korbeinsatz
- Fig. 6:: eine Seitenansicht auf die linke Seite eines auswechselbaren Korbeinsatzes

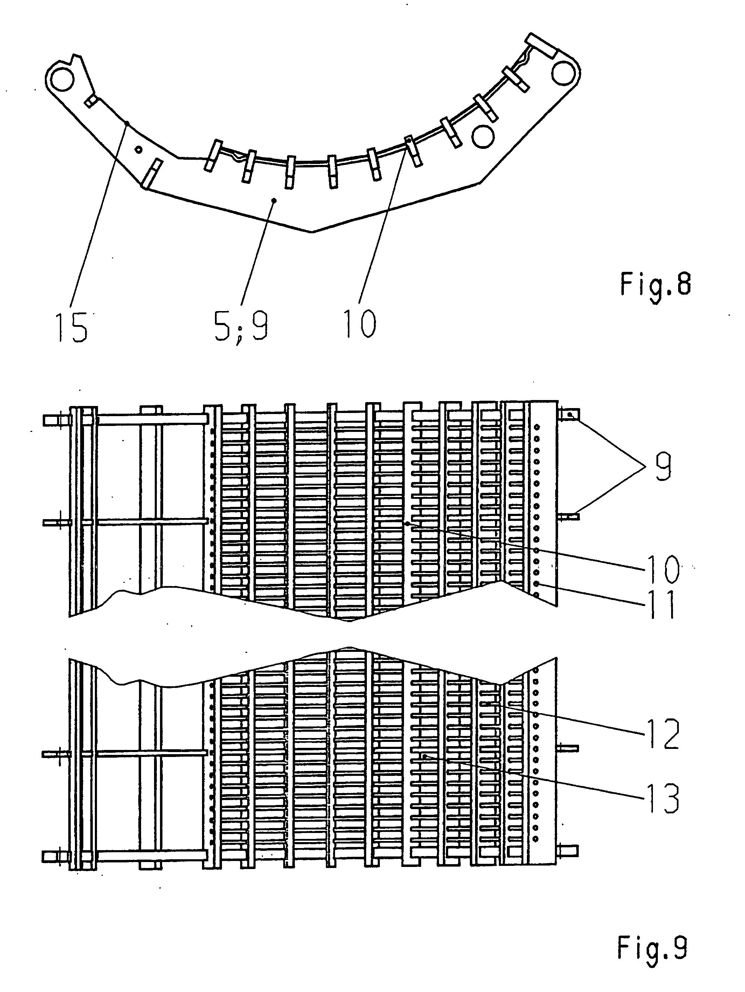

- Fig. 7:: eine Draufsicht nach Figur 6
- Fig. 8:: eine Seitenansicht auf die linke Seite eines Dreschkorbes ohne auswechselbarem Korbeinsatz
- Fig. 9:: eine Draufsicht nach Figur 8.

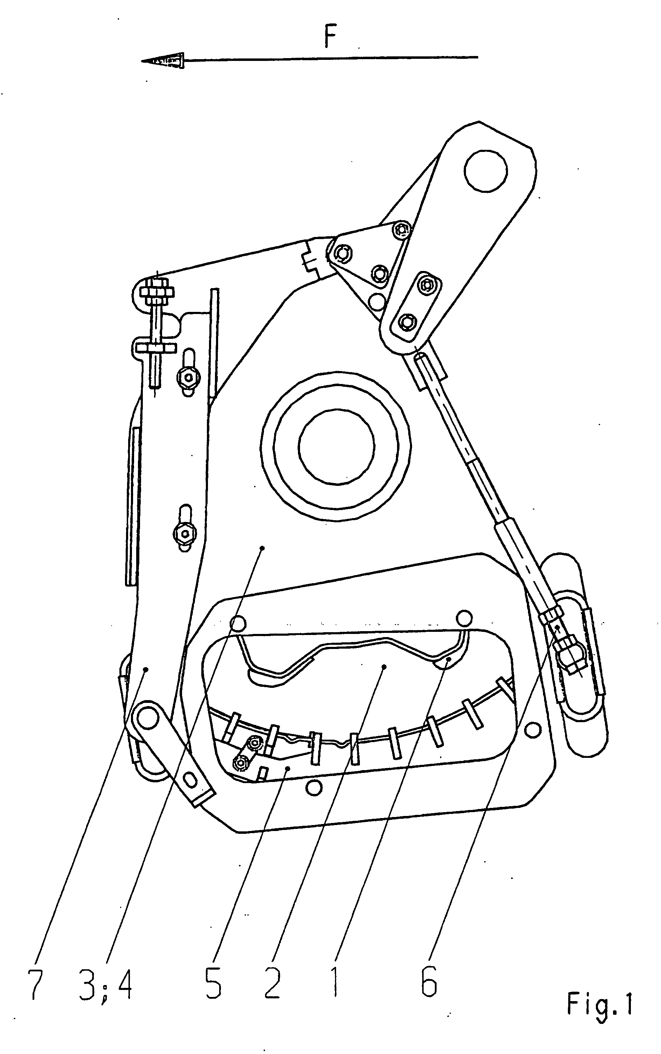

In Figur 1 ist eine Seitenansicht auf die linke Seite eines Mähdreschers im Bereich der Dreschtrommel 1 eines Tangential- Dreschwerkes dargestellt, wo durch eine verschließbare Öffnung 2 in der Seitenwand 3 des Gestells 4 ein Stück der Dreschtrommel 1 und der größte Teil des Dreschkorbes 5 zu sehen ist. Der Dreschkorb 5 befindet sich hier gerade in einer gegenüber der Arbeitsposition beim Dreschen in einer etwas abgesenkten Stellung, was durch die mit dem Dreschkorb 5 gelenkig verbundene hintere Korbaufhängung 6 und die vordere Korbaufhängung 7 gemeinsam bewirkt wird.

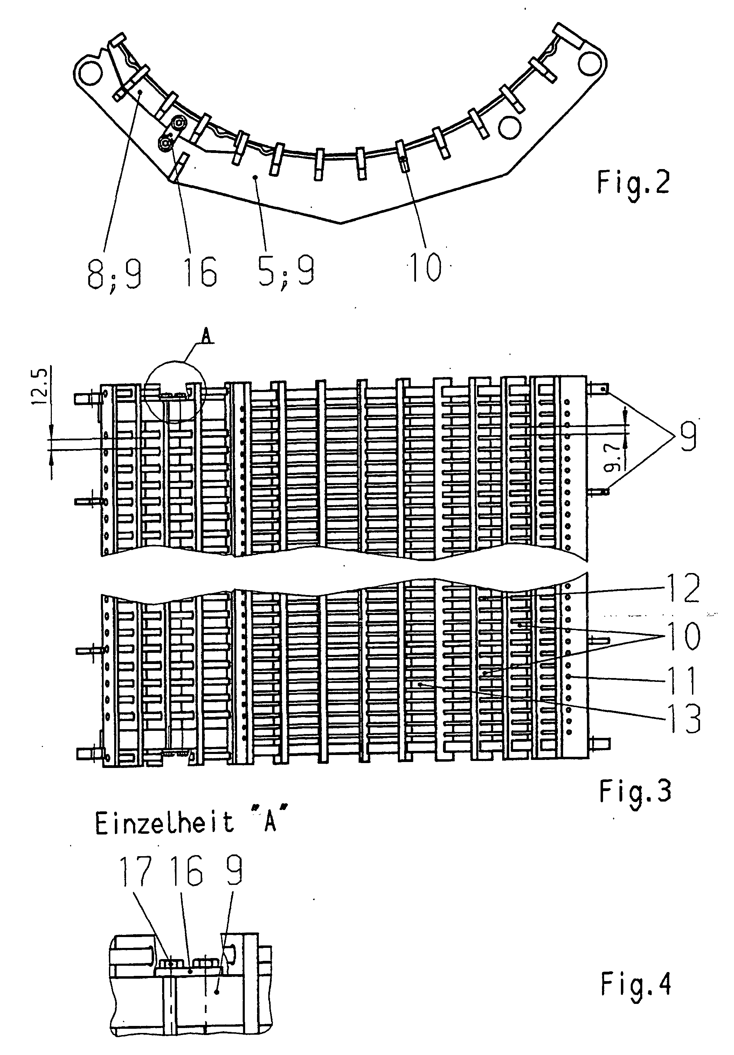

Der Aufbau eines kompletten Dreschkorbes 5 ist am besten in den Figuren 2 und 3 zu sehen. In seinem vorderen Teil befindet sich ein auswechselbarer Korbeinsatz 8 und der hintere Teil weist wie übrigens auch der auswechselbare Korbeinsatz 8 den üblichen Aufbau eines Dreschkorbes 5 zum Ausdrusch von Getreide und Sonderkulturen auf. Beide besitzen mehrere sich in Umfangsrichtung der Dreschtrommel 1 erstreckende und seitlich voneinander beabstandete Korbwangen 9, die mit quer zu ihnen angeordneten Korbleisten 10 verbunden sind. In Durchgangsbohrungen 11 der Korbleisten 10 stecken in Umfangsrichtung der Dreschtrommel 1 zeigende Korbdrähte 12, die durch ihren seitlichen Abstand voneinander die sogenannten freien Durchlaßflächen 13 des Dreschkorbes 5 bilden.

Als auswechselbare Korbeinsätze 8 stehen in diesem Ausführungsbeispiel drei Stück mit einem seitlichen Abstand der Korbdrähte 12 von 7,5 Millimetern, 9,7 Millimetern und 12,5 Millimetern zur Verfügung. Der sich an die auswechselbaren Korbeinsätze 8 anschließende Teil des Dreschkorbes 5 ist dagegen mit Korbdrähten 12 mit einem konstanten seitlichen Abstand in einer durchschnittlichen bzw. für alle Bedingungen mittleren Größenordnung von 9,7 Millimetern ausgestattet.

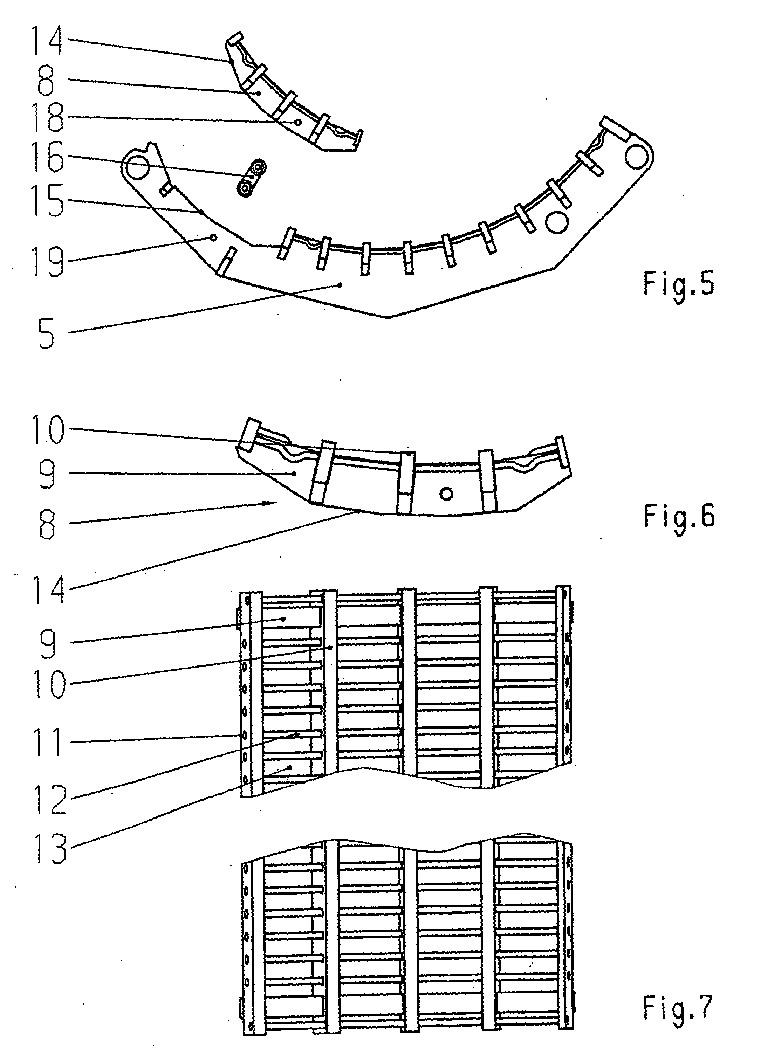

Die konstruktive Gestaltung der formschlüssigen Befestigung der auswechselbaren Korbeinsätze 8 am Dreschkorb 5 zeigen die Figuren 2 bis 5. Dazu sind wenigstens die nach unten zeigenden Außenkonturen 14 der Korbwangen 9 der auswechselbaren Korbeinsätze 8 trapezförmig ausgebildet, die in formgleichen Ausnehmungen 15 der Korbwangen 9 des Dreschkorbes 5 aufgenommen sind. Sie sind miteinander durch je eine Haltelasche 16 an diesen beiden außen liegenden Korbwangen 9 verbunden, indem die endseitig in die Haltelaschen 16 eingesteckten Sechskantschrauben 17 einerseits in Gewindelöcher 18 in den Korbwangen 9 der auswechselbaren Korbleisten 8 und andererseits in Gewindelöcher 19 in den Korbwangen 9 des Dreschkorbes 5 eingeschraubt werden.

### Bezugszeichenaufstellung

- 1: Dreschtrommel
- 2: Öffnung
- 3: Seitenwand
- 4: Gestell
- 5: Dreschkorb
- 6: hintere Korbaufhängung
- 7: vordere Korbaufhängung
- 8: auswechselbarer Korbeinsatz
- 9: Korbwange
- 10: Korbleiste
- 11: Durchgangsbohrungen
- 12: Korbdrähte
- 13: freie Durchlaßflächen
- 14: Außenkontur
- 15: Ausnehmung
- 16: Haltelasche
- 17: Sechskantschraube
- 18: Gewindeloch
- 19: Gewindeloch
- F: Fahrtrichtung

## Patentansprüche

1. Dreschkorb für Mähdrescher mit einem Tangential- Dreschwerk, bestehend aus:
◆ mehreren sich in Umfangsrichtung der Dreschtrommel (1) erstreckenden und seitlich voneinander beabstandeten Korbwangen (9),
◆ quer zu den Korbwangen (9) ausgerichteten und mit ihnen verbundenen Korbleisten (10),
◆ in Umfangsrichtung der Dreschtrommel (1) ausgerichteten Korbdrähten (12), die mit den Korbleisten (10) verbunden sind und durch ihren seitlichen Abstand voneinander die freien Durchlaßflächen (13) des Dreschkorbes (5) bilden,
◆ wenigstens einem auswechselbaren Korbeinsatz (8),
**dadurch gekennzeichnet, daß**:
a) der in Durchflußrichtung des Dreschgutes durch das Tangential- Dreschwerk gesehene vordere Teil des Dreschkorbes (5) eine Aufnahmemöglichkeit für auswechselbare Korbeinsätze (8) mit unterschiedlich großen freien Durchlaßflächen (13) aufweist,
b) der in Durchflußrichtung des Dreschgutes durch das Tangential- Dreschwerk gesehene und sich an die auswechselbaren Korbeinsätze (8) anschließende Teil des Dreschkorbes (5) mit Korbdrähten (12) bestückt ist, zwischen denen sich unveränderbare freie Durchlaßflächen (13) einer durchschnittlichen bzw. mittleren Größenordnung befinden.

2. Dreschkorb nach Anspruch 1, **dadurch gekennzeichnet, daß** die auswechselbaren Korbeinsätze (8) annähernd ein Drittel der Länge eines kompletten Dreschkorbes (5) einnehmen.

3. Dreschkorb nach den Ansprüchen 1 und 2, **dadurch gekennzeichnet, daß** die Korbwangen (9), die Korbleisten (10) und die Korbdrähte (12) der auswechselbaren Korbeinsätze (8) unlösbar miteinander verbunden sind.

4. Dreschkorb nach den Ansprüchen 1 bis 3, **dadurch gekennzeichnet, daß** die Korbdrähte (12) der auswechselbaren Korbeinsätze (8) in einem seitlichen Abstand von etwa 7,5 Millimetern, 9,7 Millimetern und 12,5 Millimetern angeordnet sind.

5. Dreschkorb nach den Ansprüchen 1 bis 4, **dadurch gekennzeichnet, daß** die auswechselbaren Korbeinsätze (8) wenigstens in Durchflußrichtung des Dreschgutes durch das Tangential- Dreschwerk gesehen formschlüssig und lösbar am Dreschkorb (5) befestigt sind.

6. Dreschkorb nach Anspruch 1, **dadurch gekennzeichnet, daß** die Korbwangen (9), die Korbleisten (10) und die Korbdrähte (12) des sich an die auswechselbaren Korbeinsätze (8) anschließenden Teils des Dreschkorbes (5) unlösbar miteinander verbunden sind.

7. Dreschkorb nach den Ansprüchen 1 und 6, **dadurch gekennzeichnet, daß** die Korbdrähte (12) des sich an die auswechselbaren Korbeinsätze (8) anschließenden Teils des Dreschkorbes (5) in einem seitliche Abstand von etwa 9,7 Millimetern angeordnet sind.

8. Dreschkorb nach einem oder mehreren der vorstehenden Ansprüche, **dadurch gekennzeichnet, daß** die auswechselbaren Korbeinsätze (8) derart symmetrisch ausgebildet sind, daß sie nach einer Drehung um 180 Grad um ihre Hochachse in die Aufnahmemöglichkeit im vorderen Teil des Dreschkorbes (5) passen.

## Claims

1. Threshing cage for a combine harvester with a tangential threshing unit, consisting of:
◆ several cage cheeks (9) extending in the direction of the circumference of the threshing cylinder (1) and at a lateral distance from each other,
◆ cage strips (10) aligned transversely to the cage cheeks (9) and connected to them,
◆ cage wires (12) aligned in the direction of the circumference of the threshing cylinder (1), which are connected to the cage strips (10) and through their lateral distance from each other form the free feed-through areas (13) of the threshing cage (5),
◆ at least one exchangeable cage insert (8),
**characterised in that:**
a) the front part of the threshing cage (5), viewed in the direction of flow of the threshed material through the tangential threshing unit, has a receptacle for holding exchangeable cage inserts (8) with different sizes of free feed-through areas (13),
b) the part of the threshing cage (5), viewed in the direction of flow of the threshed material through the tangential threshing unit, adjacent to that fitted with the exchangeable cage inserts (8) is fitted with cage wires (12), between which are located invariable free feed-through areas (13) with an average or medium order of magnitude.

2. Threshing cage in accordance with claim 1, **characterised in that**, the exchangeable cage inserts (8) take up approximately one third of the length of a complete threshing cage (5).

3. Threshing cage in accordance with claims 1 and 2, **characterised in that**, the cage cheeks (9), the cage strips (10) and the cage wires (12) of the exchangeable cage inserts (8) are permanently joined to each other.

4. Threshing cage in accordance with claims 1 to 3, **characterised in that**, the cage wires (12) of the exchangeable cage inserts (8) are arranged at a lateral distance of ca. 7.5 millimetres, 9.7 millimetres and 12.5 millimetres.

5. Threshing cage in accordance with claims 1 to 4, **characterised in that**, the exchangeable cage inserts (8) at least viewed in the direction of flow of the threshed material through the tangential threshing unit are fixed to the threshing cage (5) positively locked and removably.

6. Threshing cage in accordance with claim 1, **characterised in that**, the cage cheeks (9), the cage strips (10) and the cage wires (12) in the adjacent part of the threshing cage (5) are joined to each other permanently.

7. Threshing cage in accordance with claims 1 and 6, **characterised in that**, the cage wires (12) in the part of the threshing cage (5) adjacent to that with the exchangeable cage inserts (8) are arranged at a lateral distance of ca. 9.7 millimetres.

8. Threshing cage in accordance with one or more of the preceding claims, **characterised in that**, the exchangeable cage inserts (8) are formed symmetrically in such a way that after a rotation by 180 degrees about their vertical axis they fit into the receptacle in the front part of the threshing cage (5).

## Revendications

1. Contre-batteur pour moissonneuse-batteuse avec un mécanisme de battage tangentiel qui se compose de :
◆ plusieurs faces de panier (9) qui s'étendent dans le sens circonférentiel du batteur (1) et qui sont éloignées latéralement l'une de l'autre (9),
◆ de barres de guidage du panier (10) qui passent à travers les faces du panier (9) et qui y sont reliées,
◆ fils de panier (10) dirigés dans le sens circonférentiel du batteur (1) qui sont reliés aux barres de guidage du panier (10) et qui forment les surfaces de passage libres (13) du contre-batteur (5) grâce à leur éloignement latéral les uns des autres,
◆ au moins un support de panier amovible (8),
**caractérisé en ce que** :
a) la partie avant du contre-batteur (5) vue dans le sens d'écoulement du produit battu à travers le mécanisme de battage tangentiel présente une possibilité de suspension/positionnement/support pour le support de panier amovible (8) avec des surfaces de passage libres (13) de tailles différentes,
b) la partie du contre-batteur (5) vue dans le sens d'écoulement du produit battu à travers le mécanisme de battage tangentiel et reliée au support de panier amovible (8) est équipée de fils du panier (12) entre lesquels se trouvent des surfaces de passage libres constantes (13) de dimension moyenne.

2. Contre-batteur selon la revendication 1, **caractérisé en ce que** les supports de panier amovibles (8) occupent environ un tiers de la longueur d'un contre-batteur complet (5).

3. Contre-batteur selon les revendications 1 et 2, **caractérisé en ce que** les faces du panier (9), les barres de guidage du panier (10) et les fils du panier (12) des supports de panier amovibles (8) sont reliés entre eux de manière non détachable

4. Contre-batteur selon les revendications 1 à 3, **caractérisé en ce que** les fils du panier (12) des supports du panier amovibles (8) sont disposés à une distance latérale d'environ 7,5 millimètres, 9,7 millimètres et 12,5 millimètres.

5. Contre-batteur selon les revendications 1 à 4, **caractérisé en ce que** les supports du panier amovibles (8) sont fixés de manière mécanique et détachable au contre-batteur (5) vu dans le sens d'écoulement du produit battu à travers le mécanisme de battage tangentiel.

6. Contre-batteur selon la revendication 1, **caractérisé en ce que** les faces du panier (9), les barres de guidage du panier (10) et les fils du panier (12) de la partie du contre-batteur (5) reliée aux support du panier amovibles (8) sont reliés entre eux de manière non détachable.

7. Contre-batteur selon les revendications 1 et 6, **caractérisé en ce que** les fils du panier (12) de la partie du contre-batteur (5) reliée aux supports de panier amovibles (8) sont placés à une distance latérale d'environ 9,7 millimètres.

8. Contre-batteur selon une ou plusieurs des revendications mentionnées précédemment, **caractérisé en ce que** les supports de panier amovibles sont construits symétriquement de manière à ce qu'ils passent dans la partie avant du contre-batteur (5) après une rotation de 180 degrés autour de leur axe vertical dans la possibilité de positionnement.
